# EUROPÄISCHE PATENTSCHRIFT

(11) **EP 2 464 894 B1**
(45) Veröffentlichungstag und Bekanntmachung des Hinweises auf die Patenterteilung: **22.10.2014**
(21) Anmeldenummer: 10733006.0
(22) Anmeldetag: 19.07.2010
(51) Int. Cl.: F16H 25/22

(54) **KUGELGEWINDETRIEB MIT MARKIERUNGEN FÜR ANSCHLAG UND MONTAGEVERFAHREN FÜR EINEN SOLCHEN KUGELGEWINDETRIEB**
BALL SCREW DRIVE WITH MARKINGS FOR STOP AND MOUNTING METHOD FOR A BALL SCREW DRIVE OF THIS TYPE
VIS À BILLES COMPRENANT DES REPÈRES POUR LA BUTÉE ET PROCÉDÉ DE MONTAGE POUR UNE TELLE VIS À BILLES

(30) Priorität: 10.08.2009 DE 102009036887
(43) Veröffentlichungstag der Anmeldung: 20.06.2012
(73) Patentinhaber: Schaeffler Technologies GmbH & Co. KG, 91074 Herzogenaurach (DE)
(72) Erfinder: OSTERLÄNGER, Jürgen, 91448 Emskirchen (DE); MIKO, Josef, Rochester Hills, MI 48306 (US); KRAUS, Manfred, 91074 Herzogenaurach (DE); BÄRTHLEIN, Stefanie, 91460 Baudenbach (DE)
(86) Internationale Anmeldenummer: PCT/EP2010/060444
(87) Internationale Veröffentlichungsnummer: WO 2011/018305

(56) Entgegenhaltungen:
- EP-A1- 1 058 795
- US-A- 2 590 251
- US-A- 2 944 437
- US-A- 3 202 008
- US-A- 5 088 339

## Beschreibung

### Gebiet der Erfindung

Die vorliegende Erfindung betrifft einen Kugelgewindetrieb. Kugelgewindetriebe wandeln rotatorische Bewegungen in translatorische Bewegungen um. Die vorliegende Erfindung betrifft insbesondere auch eine Betätigungseinrichtung für eine Bremse, insbesondere Feststellbremse eines Kraftfahrzeugs, mit einem derartigen Kugelgewindetrieb.

### Hintergrund der Erfindung

Aus der gattungsbildenden EP 1058795 B1 ist eine Betätigungseinrichtung für eine Feststellbremse eines Kraftfahrzeuges bekannt geworden, bei der ein Kugelgewindetrieb vorgesehen ist.

Die von einem Elektromotor angetriebene Gewindespindel bewirkt eine relative Axialverschiebung zwischen der Gewindemutter und der Gewindespindel, wobei die Gewindemutter in ihrer Vorschubrichtung über weitere angeschlossene Maschinenteile eine Druckkraft auf einen Reibbelag einer Scheibenbremse ausübt. Wenn die Gewindespindel entgegen der Vorschubrichtung angetrieben wird, fährt die Gewindemutter zurück in Richtung auf ein Ende der Gewindespindel. An diesem Ende ist ein umfangsseitiger Anschlag für die Gewindemutter vorgesehen. Dieser Anschlag ist als Vorsprung an einem drehfest auf der Gewindespindel angeordneten Anschlagteil ausgebildet. Die Gewindemutter ist an ihrer dem Ansachlagteil zugewandten Seite ebenfalls mit einem zweiten Vorsprung versehen, der gegen den Vorsprung anschlägt. Unter schraubender Relativdrehung bewegt sich die Gewindemutter auf das Anschlagteil zu; schließlich schlägt der zweite Vorsprung gegen den Vorsprung und eine weitere Relativdrehung zwischen der Gewindespindel und der Gewindemutter ist aufgrund eines Formschlusses der Gewindemutter mit der Gewindespindel über das mit dem Vorsprung versehene Anschlagteil ausgeschlossen. Das Zusammenspiel der an dem Anschlagen beteiligten Teile wird bestimmt durch die bei dem Kugelgewindetrieb vorhandene Steigung und durch die Drehlagenposition des Anschlagteils auf der Gewindespindel; bei jeder vollen Umdrehung der Gewindespindel bewegt sich die Gewindemutter gerade um das Steigungsmaß auf das Anschlagteil zu. Kurz bevor die Gewindemutter an dem Anschlagteil anschlägt, wird der Anschlag wirksam. Die Drehlagenposition des Anschlagteiles ist wesentlich für das einwandfreie Funktionieren des umfangsseitigen Anschlags. Der umfangsseitige Anschlag ist demzufolge wirksam, bevor die Gewindemutter mit dem auf der Gewindespindel befestigten Anschlagteil axial verspannt werden kann.

In der hier beschriebenen Anwendung des Kugelgewindetriebes ist ein derartiger umfangsseitiger Anschlag für die einwandfreie Funktion des Kugelgewindetriebes von Bedeutung. Ohne einen derartigen umfangsseitigen Anschlag bestünde die unerwünschte Möglichkeit, dass die Gewindemutter wie eine fest gezogene Schraubenmutter axial verspannt wird, und ein Lösen dieser axialen Verspannung nur noch unter Aufbringung eines erheblichen Drehmomentes möglich ist.

Wenn beispielsweise bei der beschriebenen bekannten Feststellbremse das Anschlagteil mit dem Vorsprung in einer anderen Drehlagenposition an der Gewindespindel befestigt wäre, könnte die Situation eintreten, dass die Gewindemutter gegen das Anschlagteil anschlägt, bevor der Vorsprung in die Ausnehmung eingreift und eine weitere Relativdrehung verhindert. Dann würden die Gewindemutter und das Anschlagteil axial verspannt sein.

Bei der Herstellung der Gewindespindeln und der Gewindemuttern enden die Kugelrillen an einem Einlaufende und an einem Auslaufende. Die Lage dieser Einlaufenden und Auslaufenden bestimmt letztlich auch, in welcher Drehlage der Anschlag an der Gewindespindel anzuordnen ist. Im beschriebenen Beispiel wird die Drehlagenposition des Anschlagteiles an die Drehlage der Gewindemutter in ihrer Anschlagposition angepaßt; wenn die Einlaufenden und die Auslaufenden an veränderten Umfangsstellen der Gewindespindel und der Gewindemutter gelegen sind, ist eine geänderte Drehlagenposition der Gewindemutter in ihrer Anschlagposition zu erwarten.

Aufgabe der vorliegenden Erfindung war es daher, einen Kugelgewindetrieb nach den Merkmalen des Oberbegriffs des Anspruchs 1 anzugeben, bei dem auf einfache Art und Weise ein einwandfreies Funktionieren des umfangsseitigen Anschlages gewährleistet ist.

Erfindungsgemäß wird diese Aufgabe durch den Kugelgewindetrieb gemäß Anspruch 1 gelöst. Dadurch, dass das Anschlagteil und die Gewindemutter jeweils mit einer Markierung zur Ermittlung einer Drehlagenposition des Anschlagteiles zu der Gewindespindel versehen sind, in der das Anschlagteil an der Gewindespindel anzuordnen ist, kann die einwandfreie Drehlagenposition des Anschlagteiles an der Gewindespindel problemlos ermittelt werden.

Diese Markierungen sind in der Anschlagposition der Gewindemutter in einer bestimmten Lage zueinander angeordnet, vorzugsweise miteinander fluchtend angeordnet. Wenn beispielsweise die Gewindemutter in ihre Anschlagposition auf der Gewindespindel gefahren wird, genügt es, das Anschlagteil derart an der Gewindespindel anzuordnen, dass die Markierungen ihre vorbestimmte Position zueinander eingenommen haben; wenn also beispielsweise die vorbestimmte Position ein Fluchten der Markierungen vorsieht, genügt es, das Anschlagteil so zu drehen, bis die Markierungen übereinstimmen. In dieser Drehlagenposition des Anschlagteiles auf der Gewindespindel kann das Anschlagteil auf der Gewindespindel oder an einem Abschnitt der Gewindespindel zur Übertragung von Drehmomenten festgelegt werden.

Für eine automatisierte Montage kann es von Vorteil sein, wenn diese Markierungen am Außenumfang der Gewindemutter und des Anschlagteils ausgebildet sind. Sind diese Markierungen beispielsweise durch Kerben oder andere Ausnehmungen gebildet, also optisch erkennbar, können diese Markierungen über geeignete Messaufnehmer erkannt werden, die über der Gewindemutter und dem Anschlagteil angeordnet sein können. Sobald diese Markierungen miteinander fluchten, kann beispielsweise über eine geeignete Steuerung ein nächster Montageschritt ausgelöst werden, in dem das Anschlagteil auf der Gewindespindel zu Übertragung von Drehmomenten angeordnet wird.

Es ist nicht erforderlich, für die Ermittlung der einwandfreien Drehlagenposition des Anschlagteils gegenüber der Gewindespindel die Gewindemutter in ihre Anschlagposition zu fahren: denn die Markierung an der Gewindemutter fluchtet immer noch mit der Markierung an dem Anschlagteil, wenn die Gewindemutter - ausgehend von ihrer Anschlagposition - mehrere vollständige Umdrehungen weg von dem Anschlagteil geschraubt ist.

Vorzugsweise besteht zwischen dem Anschlagteil und der Gewindespindel eine formschlüssige Verbindung in einer Vielzahl von Drehlagenpositionen des Anschlagteils gegenüber der Gewindespindel. Diese formschlüssige Verbindung kann beispielsweise durch eine Verzahnung oder durch eine Vielkantverbindung gebildet sein. Wird eine Verzahnung gewählt, sind entsprechend der gegebenen Teilung der Verzahnung eine Vielzahl von Drehlagenpositionen möglich, in der das Anschlagteil formschlüssig mit der Gewindespindel verzahnt werden kann.

Falls als formschlüssige Verbindung eine Vielkantverbindung gewählt wird, kann an dem Anschlagteil ein Innenvielkant und an einem Abschnitt der Gewindespindel ein Außenvielkant ausgebildet sein. Der Innenvielkant und der Außenvielkant sollten jeweils mit wenigstens acht gleichmäßig über den Umfang verteilt angeordneten Kanten versehen sein, um eine ausreichend große Anzahl von möglichen Drehlagenpositionen des Anschlagteils auf der Gewindespindel zu ermöglichen. Je mehr Kanten bei dieser Vielkantverbindung vorgesehen sind, desto mehr Drehlagenpositionen sind möglich.

Bei der Montage des Anschlagteils kann das Anschlagteil zunächst mit axialem Abstand zu einer an der Gewindespindel vorgesehenen Außenverzahnung gehalten werden, bis eine Drehlagenposition ermittelt wurde, in der die beiden Markierungen vorzugsweise miteinander fluchtend angeordnet sind. Nun kann das Anschlagteil axial auf die Außenverzahnung aufgeschoben werden, wobei eine an dem Anschlagteil vorgesehene Innenverzahnung in die Außenverzahnung der Gewindespindel eingreift.

Eine Betätigungseinrichtung einer Feststellbremse eines Kraftfahrzeuges kann in günstiger Weise mit einem erfindungsgemäßen Kugelgewindetrieb versehen sein. Bei einer derartigen Betätigungseinrichtung kann das Anschlagteil durch eine Stützscheibe gebildet sein, über die die Gewindespindel in axialer Richtung an einem Axiallager abgestützt werden kann. Bei Feststellbremsen kann beispielsweise die Gewindemutter mit einem Kolben zusammenarbeiten, der schließlich Bremsbeläge gegen eine Bremsscheibe andrückt. Die dabei auftretenden axialen Kräfte werden über die Gewindemutter und die Gewindespindel über das Axiallager in ein Gehäuse der Feststellbremse geleitet. An dieser Stützscheibe kann in bekannter Weise ein Vorsprung ausgebildet sein, der in eine Ausnehmung an der Gewindemutter eingreift.

Für optische Markierungen eignen sich Einprägungen, Mulden, Ausnehmungen oder Vorsprünge, die auf einfache Art und Weise erkannt werden können.

### Kurze Beschreibung der Zeichnung

Zwei Ausführungsbeispiele der Erfindung sind in den Zeichnungen dargestellt und werden im Folgenden näher beschrieben. Es zeigen:
- Fig. 1: eine Prinzipdarstellung einer Bremseinrichtung mit einem erfindungsgemäßen Kugelgewindetrieb in unbelastetem Zustand im Schnitt,
- Fig. 2: eine vergrößerte Detailansicht des Bereichs II aus Fig. 1,
- Fig. 3: eine vergrößerte Detailansicht des Bereichs III aus Fig. 1, und
- Fig. 4: die Bremseinrichtung aus Fig. 1 in belastetem Zustand mit relativ zueinander verkippten Elementen,
- Fig. 5: eine weitere Bremseinrichtung mit einem erfindungsgemäßen Kugelgewindetrieb im Schnitt,
- Fig. 6: den Kugelgewindetrieb aus Fig. 5 und
- Fig. 7: eine Ausschnittvergrößerung aus Figur 6,
- Fig. 8: Einzelteile des Kugelgewindetriebes aus Figur 6,
- Fig. 9: ein weiteres Einzelteil des Kugelgewindetriebes aus Figur 6
- Fig. 10: den erfindungsgemäßen Kugelgewindetrieb in teilweise gebrochener Darstellung, und
- Fig. 11: den erfindungsgemäßen Kugelgewindetrieb aus Figur 10 im Querschnitt entlang der Schnittlinie XI-XI.

### Ausführliche Beschreibung der Zeichnung

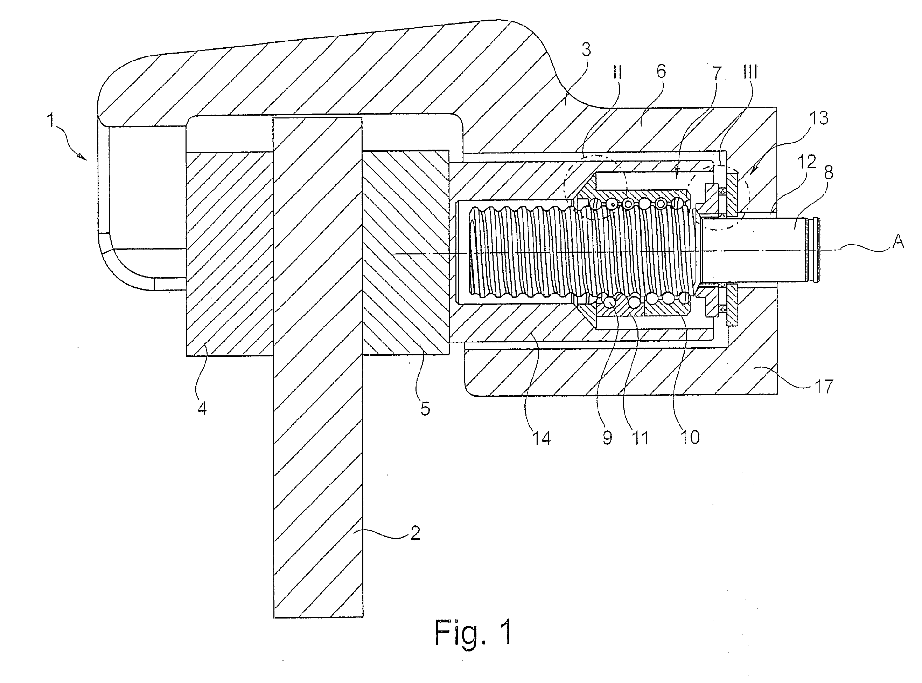

Fig. 1 zeigt eine erfindungsgemäße Bremseinrichtung 1, wie sie beispielsweise in einem Kraftfahrzeug als Parkbremse oder Feststellbremse realisiert sein kann. Die Bremseinrichtung 1 umfasst eine Bremsscheibe 2, die in bekannter Weise mit dem Rad verbunden ist, sowie eine die Bremsscheibe 2 übergreifende, im Querschnitt im Wesentlichen C-förmige Bremszange 3. In dieser sind zwei Bremsbeläge 4, 5 aufgenommen, die beidseits der zwischen ihnen angeordneten Bremsscheibe 2 positioniert sind und zum Bremsen fest an dieser anliegen, die Bremsscheibe dann zwischen sich verklemmend. Fig. 1 zeigt die Lösestellung, wenn die Bremsscheibe 2 also nicht verspannt ist, die Bremsscheibe 2 kann frei zwischen den beiden Bremsbelägen 4, 5 drehen, wenngleich diese eher aus Gründen der Darstellung direkt an der Bremsscheibe anliegen. Tatsächlich ist zwischen der Bremsscheibe 2 und den Bremsbelägen 4, 5 ein minimaler Spalt gegeben, der in der Lösestellung die freie Drehbarkeit ermöglicht.

Fig. 1 zeigt ferner einen in einem gegebenenfalls gehäuseartigen Abschnitt 6 der Bremszange 3 aufgenommenen erfindungsgemäßen Kugelgewindetrieb 7, bestehend aus einer Gewindespindel 8, auf der über Kugeln 9 geführt eine Gewindemutter 10 läuft, wobei die Kugeln 9 endlos umlaufen und über wenigstens ein Kugelrückführelement 11 stets zurückgesetzt werden. Die Spindel 8 ist mit einem hier nicht näher gezeigten Antriebsmotor, der bevorzugt im Bereich der Außenseite des gehäuseartigen Abschnitts 6 angeordnet ist und unter einem Winkel von z. B. 90° mit seiner Abtriebswelle zur Gewindespindel 8 steht, verbunden. Seine Abtriebswelle ist mit der Gewindespindel 8 über eine kardanische Verbindung gekoppelt, die den motorischen Antrieb der Gewindespindel 8 ermöglicht. Die Gewindespindel 8 ist ferner an der Bremszange 3 über ein Radiallager 12 sowie ein Axiallager 13 hier in Form eines Nadellagers lagefest drehgelagert.

Die Gewindemutter 10 ihrerseits ist mit einem Kolben 14 gekoppelt, dieser liegt an der vorderen Stirnkante der Gewindemutter 10 auf, ist dort also abgestützt. Am Kolben 14 ist der bewegliche Bremsbelag 5 angeordnet. Wird nun durch Betätigen eines geeigneten fahrzeugseitigen Betätigungselements der nicht näher gezeigte Antriebsmotor angesteuert, um die Bremseinrichtung zu betätigen, mithin also die Bremsscheibe 2 zu fixieren, so dreht über den Antriebsmotor bewegt die Gewindespindel 8, was dazu führt, dass die Gewindemutter 10 längs der Gewindespindel 8, über die Kugeln 9 geführt, wandert, sich ausgehend von Fig. 1 also nach links bewegt. Hierbei wird der auf der Stirnfläche der Gewindemutter 10 aufgelagerte Kolben 14 und mit ihm der Bremsbelag 5 nach links gedrückt, so dass er in feste Anlage gegen die am anderen Bremsbelag 4 gegengelagerte Bremsscheibe gedrückt wird, worüber diese zwischen beiden Bremsbelägen 4, 5 fixiert wird.

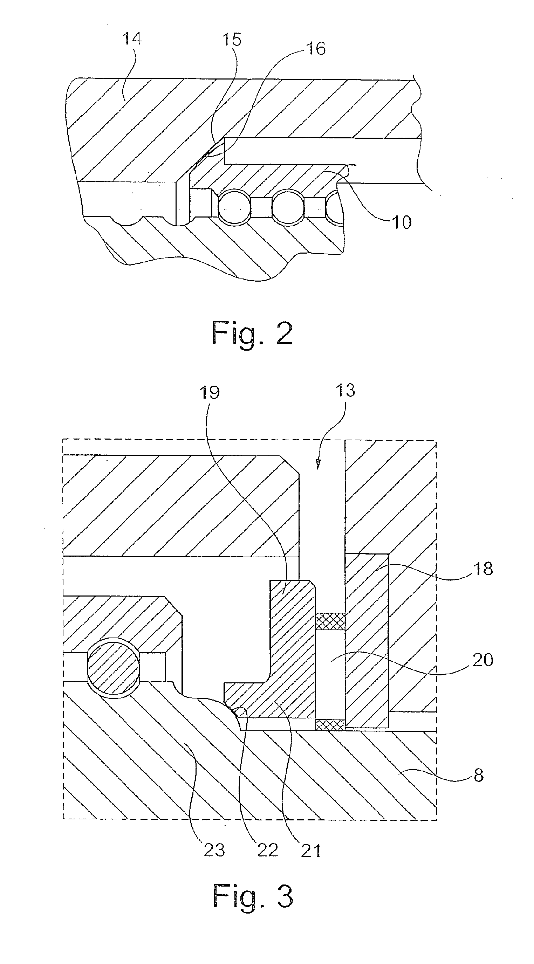

Fig. 2 zeigt in vergrößerter Darstellung eine Teilansicht aus dem Auflagerbereich des Kolbens 14 auf der Gewindemutter 10. Der Kolben 14 weist eine konische Führungsfläche 15 auf, der eine der Grundform nach ebenfalls konische zweite Führungsfläche 16 an der Stirnseite der Gewindemutter 10 gegenüberliegt, die jedoch eine ballige oder konvexe Außenform aufweist. Das heißt, dass hier keine flächige Anlage gegeben ist, sondern nur eine linienförmige Auflage der Führungsfläche 15 auf der Führungsfläche 16. Dies bewirkt, dass der Kolben 14 auf der Mutter 10 beweglich aufsitzt, das heißt, dass sich die Führungsfläche 15 auf der Führungsfläche 16 infolge der linienförmigen Lagerung bewegen kann. Der Kolben 14 kann also relativ zur Gewindemutter 10 verkippen, es ist eine über ein geeignetes Schmiermittel zur Reibungsreduzierung geschmierte bewegliche Lagerung realisiert.

Eine ebenfalls bewegliche Lagerung ist, wie Fig. 3 in einer vergrößerten Teilansicht zeigt, im Bereich der Lagerung der Gewindespindel 8 an der Bremszange 3 realisiert. Wie ausgeführt, ist die Gewindespindel 8 einerseits radial über das Radiallager 12 an der Wand 17 der Bremszange gelagert, andererseits über das Axiallager 13. Dieses umfasst eine erste Lagerscheibe 18 (Gehäusescheibe), die lagefest an der Wand 17 angeordnet ist, sowie eine zweite Lagerscheibe 19 (Wellenscheibe), die auf der ersten Lagerscheibe 18 über Nadelwälzkörper 20 läuft. Die Lagerscheibe 19 weist einen axialen Ansatz 21 auf, der eine konische zweite Lagerfläche 22 aufweist, die - ähnliche wie die Führungsfläche 16 bei der Lagerung des Kolben 14 auf der Gewindemutter 10 - eine ballige, konvexe Oberfläche bei vorzugsweise im Wesentlichen konischer Grundform aufweist.

Die Gewindespindel 8 ihrerseits weist eine erste, konvexe Lagerfläche 23 auf. Ersichtlich ist also auch hier eine bewegliche Lagerung realisiert, nachdem auch hier die erste Lagerfläche 23 nur entlang einer Linie, nicht jedoch flächig, auf der zweiten Lagerfläche 22 aufliegt. Dies führt dazu, dass die Gewindespindel 8 etwas relativ zum lagefesten Axiallager 13 bzw. zur lagefesten Lagerscheibe 19, ebenfalls geschmiert, verkippen kann. Diese Verkippung ist dadurch möglich, dass die Gewindespindel 8 im Radiallager 12 ebenfalls mit etwas Spiel aufgenommen ist respektive das Radiallager, beispielsweise ein Kunststoffgleitlager, eine gewisse Verkippung zulässt. Der Verkippungswinkel liegt im Betrieb, wenn es zu der Zangenaufweitung infolge der wirkenden Kräfte kommt, im Bereich von deutlich < 0,5° pro beweglicher Lagerstelle, so dass das Gleitlager 12 nicht nennenswert belastet wird.

Selbstverständlich ist es bei beiden Lagerstellen möglich, die Balligkeit an der jeweils anderen Führungsfläche zu realisieren, oder auch beide Führungsflächen ballig auszugestalten.

Bei der erfindungsgemäßen Bremseinrichtung 1 sind also zwei bewegliche Lagerstellen realisiert, nämlich zum einen im Bereich der Auflagerung des Kolbens 14 auf der Mutter 10, zum anderen im Bereich der Auflagerung der Gewindespindel 8 auf dem Axiallager 13. Dies führt nun dazu, dass eine bei bekannten Bremseinrichtungen gegebene Verkippung der relevanten Achsen, aus der eine hohe Lagerbelastung resultiert, die zu einem vorzeitigen Lagerausfall führen kann, weitgehend kompensiert werden kann, so dass die Lagerlasten deutlich verringert werden können.

In der in Fig. 1 gezeigten unbelasteten Stellung fallen die drei Längsachsen der Gewindespindel 8, der Bremszange 3 respektive des vorzugsweise zylindrischen gehäuseartigen Abschnitts 6 sowie des Kolbens 14 zusammen, sie sind dort mit A als gemeinsame Achse gekennzeichnet.

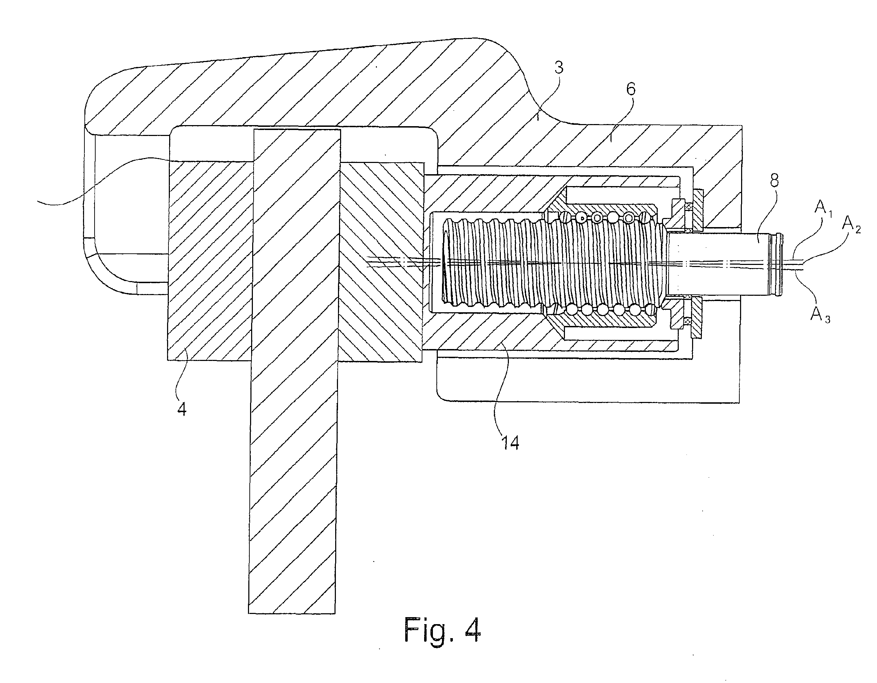

Wird nun über den nicht gezeigten Motor die Gewindespindel 8 angesteuert und über diese der Kolben 14 und mit ihm der Bremsbelag 5 gegen die Bremsscheibe 2 gedrückt, so kommt es je nach Andruckkraft zu einem mehr oder weniger starken Aufweiten oder Aufspreizen der Bremszange 3, wie dies in Fig. 4 gezeigt ist. Ersichtlich weitet sich die Bremszange 3, es bildet sich zum einen ein leichter Spalt 24 im Bereich der Bremszangenanlage am ersten Bremsbelag 4, wie sich auch deutlich eine winklige Stellung des Abschnitts 6 der Bremszange 3 relativ zum Kolben 14 einstellt. An dieser Stelle ist anzumerken, dass Fig. 4 aus Gründen der Darstellbarkeit eine deutlich überzeichnete Aufweitung und Bauteilverkippung zeigt, als real eintritt.

Dieser starke Winkelversatz kann jedoch infolge der realisierten zwei separaten Beweglichkeiten respektive beweglichen Lagerungen quasi aufgespaltet werden und die auf das Axiallager wirkende Last deutlich verringert werden. Denn zum einen führt die Verkippung der Bremszange 3, also ihre Aufspreizung dazu, dass sich der Kolben 14 relativ zur Mutter 10 leicht verkippt, was über die in Fig. 2 näher gezeigte bewegliche Auflagerung des Kolbens 14 auf der Mutter 10 über die Führungsflächen 15, 16 ergibt. In gleicher Weise kommt es zu einer leichten Verkippung der Auflagerung der Gewindespindel 8 auf dem Axiallager 13 respektive der Lagerscheibe 19 infolge der dort realisierten beweglichen Lagerung, wie in Fig. 3 gezeigt. Auch hier kommt es also zu einer wenngleich geringen Relativbewegung oder Kippbewegung. Das heißt, dass sich folglich die Elemente Kolben 14, Gewindemutter 10, Gewindespindel 8, Axiallager 13 respektive Lagerscheibe 19 lastbedingt relativ zueinander paarweise verstellen und es folglich zu einer Aufspaltung und damit gleichzeitig gegebenen lokalen Verringerung der einzelnen Verkippwinkel kommt. Mit der Relativbewegung des Axiallagers 13 zur Gewindespindel 8 kommt es auch dazu, dass sich die Gewindespindel 8 relativ zum Radiallager 12 bewegt bzw. verkippt, wie in Fig. 4 ebenfalls dargestellt ist. Während in Fig. 1 sämtliche Längsachsen wie beschrieben zusammenfallen, ergibt sich nun infolge der Bremszangenaufweitung ein Achsversatz, der jedoch deutlich geringer ist infolge der realisierten Beweglichkeiten, als er dies bei starrer Lagerung wäre. Ersichtlich fallen die einzelnen Achsen A₁ der Bremszange 3, A₂ des Kugelgewindetriebs 7 respektive der Gewindespindel 8 und A₃ des Kolbens 14 nicht mehr zusammen, gleichwohl ist der jeweilige Achsversatz relativ gering. Die im Realbetrieb auftretende maximale Schiefstellung oder Verkippung von etwa 0,5° der Bremszangenachse relativ zur Normalen auf die Bremsscheibe kann durch die erfindungsgemäß vorgesehene Entkopplung der Elemente, also ihrer relativen Beweglichkeit zueinander, gut kompensiert werden, so dass insgesamt entweder der Kugelgewindetrieb etwas kleiner dimensioniert werden kann und/oder die Lagerlebensdauer deutlich ansteigt.

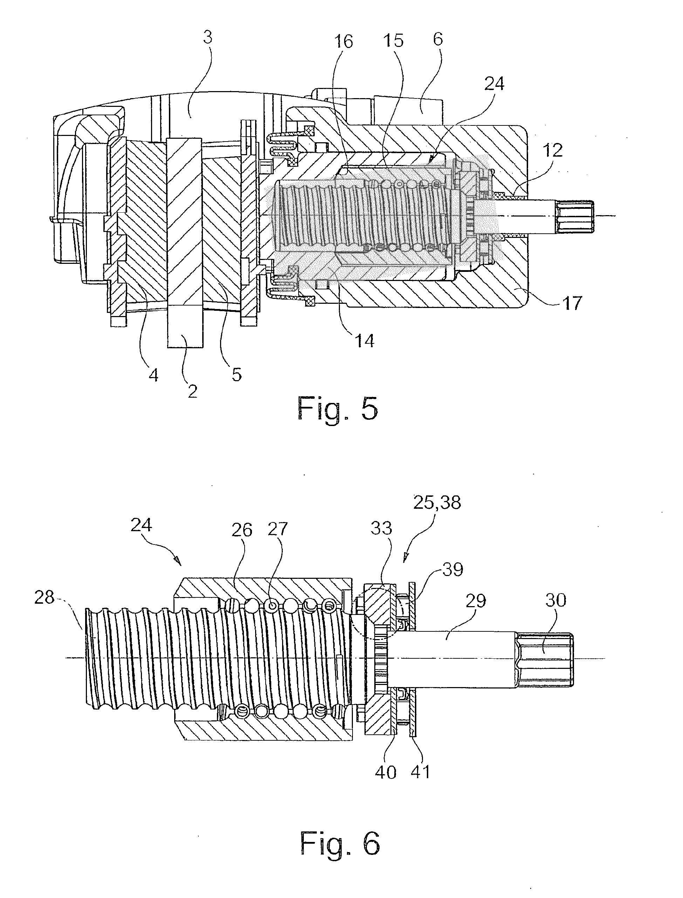

Die Figuren 5 bis 11 zeigen eine weitere Bremseinrichtung mit einem erfindungsgemäßen Kugelgewindetrieb 24. In dieser Anordnung kann die Erfindung auch als Betätigungseinrichtung für eine Feststellbremse bezeichnet werden.

Soweit die hier dargestellten Bauteile mit denen des zuvor beschriebenen Ausführungsbeispieles übereinstimmen, werden die gleichen Bezugszeichen verwendet.

Figur 5 zeigt im Schnitt eine Parkbremse oder Feststellbremse mit dem erfindungsgemäßen Kugelgewindetrieb 24. Hier ist ein gegenüber dem vorangegangenen Ausführungsbeispiel modifiziertes Axiallager 25 vorgesehen.

Der erfindungsgemäße Kugelgewindetrieb 24 mit dem Axiallager 25 ist deutlich in Figur 6 im Schnitt abgebildet. Eine Gewindemutter 26 ist über Kugeln 27 auf einer Gewindespindel 28 in bekannter Weise wälzgelagert. Die Gewindespindel 28 weist außerhalb ihres mit der Gewindemutter 26 zusammenarbeitenden Abschnitts einen radial abgestuften Spindelabschnitt 29 auf, der an seinem axialen Ende mit einem Mehrkant 30 versehen ist. Ein hier nicht abgebildetes Getriebe kann an diesen Mehrkant 30 abtriebsseitig angeschlossen werden.

Der Figur 6 ist ferner zu entnehmen, dass die Gewindespindel 28 mit ihrem Spindelabschnitt 29 durch das Axiallager 25 hindurchgeführt ist. Das Axiallager 25 umfasst eine Stützscheibe 33 sowie ein Axialwälzlager 38, bei dem Rollen 39 zwischen zwei Lagerscheiben 40,41 angeordnet sind. Die eine Lagerscheibe 40 liegt an der Stützscheibe 33 an, die andere Lagerscheibe 41 ist am gehäuseseitigen Abschnitt 6 abgestützt.

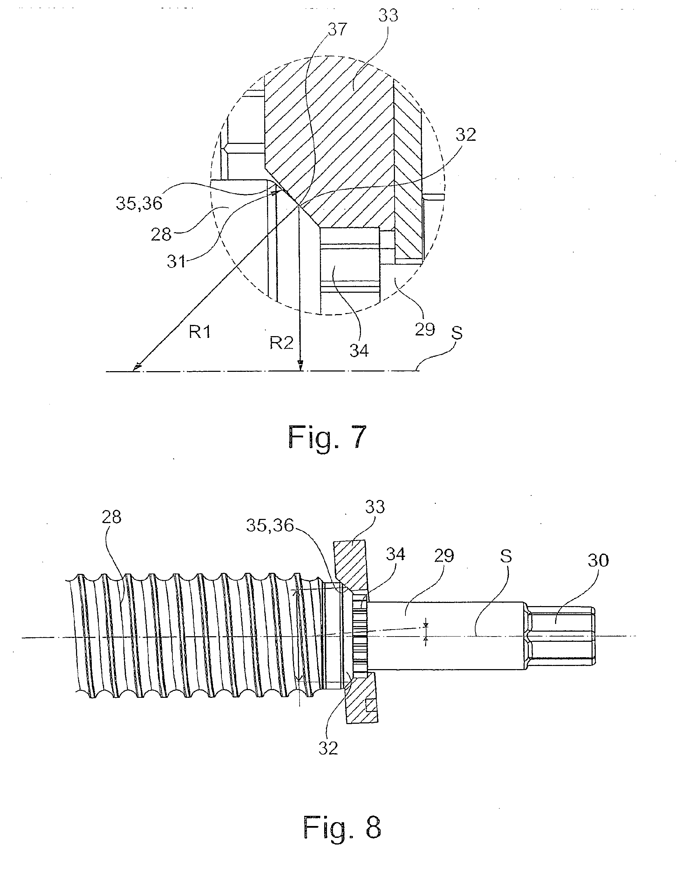

Figur 7 zeigt eine Ausschnittsvergrößerung des Kugelgewindetriebes 24 und des Axiallagers 25. Die Gewindespindel 28 ist im Übergang auf den radial abgesetzten Spindelabschnitt 29 mit einer Schulter 31 versehen. Diese Schulter 31 weist eine mit einem Krümmungsradius konvex geformte Lagerfläche 32 auf. Eine Stützscheibe 33 des Axiallagers 25 ist über eine Verzahnung 34 drehfest, aber taumelfähig auf der Gewindespindel 28 angeordnet. Die Stützscheibe 33 ist ein ihrer der ersten Lagerfläche 32 zugewandten Stirnseite mit einer konischen Öffnung 35 versehen, die eine zweite Lagerfläche 36 bildet.

In Figur 7 ist die Spindelachse S angedeutet. Der Krümmungsradius R1 der ersten Lagerfläche 32 fällt auf die Spindelachse S. Die beiden Lagerflächen 32,36 berühren einander entlang einer ringförmigen Kontaktbahn 37, deren Mittelpunkt ebenfalls auf der Spindelachse S liegt. Diese ringförmige Kontaktbahn 37 hat einen Radius R2. Der Figur 7 ist zu entnehmen, dass die beiden Radien R1 und R2 auf der Spindelachse S beabstandet zueinander angeordnet sind. Der Radius R1 ist größer als der Radius R2, wobei ein aus dem Verhältnis des Radius R1 zu dem Radius R2 gebildete Quotient erfindungsgemäß Werte zwischen 1,4 und 1,6 einschließlich dieser Werte annimmt. Ein mit dem Krümmungsradius R1 gezogener Kreis liegt in der Blattebene. Ein mit dem Krümmungsradius R2 gezogener Kreis liegt in einer quer zur Blattebene angeordneten Ebene.

Figur 8 zeigt die Situation, in der aufgrund einer elastischen Verformung der Bremszange 3 oder des gehäuseartigen Abschnitts 6 die Stützscheibe 33 gegenüber der Gewindespindel in 28 um etwa 0,5° gekippt ist, wobei in der Darstellung diese Verkippung überhöht dargestellt ist. Eine unerwünschte Belastung des Axiallagers 25 mit einem Biegemoment ist demzufolge vermieden. Die Stützscheibe 33 ist demzufolge taumelfähig auf der Gewindespindel 28 angeordnet; sie kann um quer zur Spindelachse gelegene Achsen kippen, und Drehmomente zur Übertragung von Drehmomenten zwischen Stützscheibe 33 und Gewindespindel 28 übernehmen.

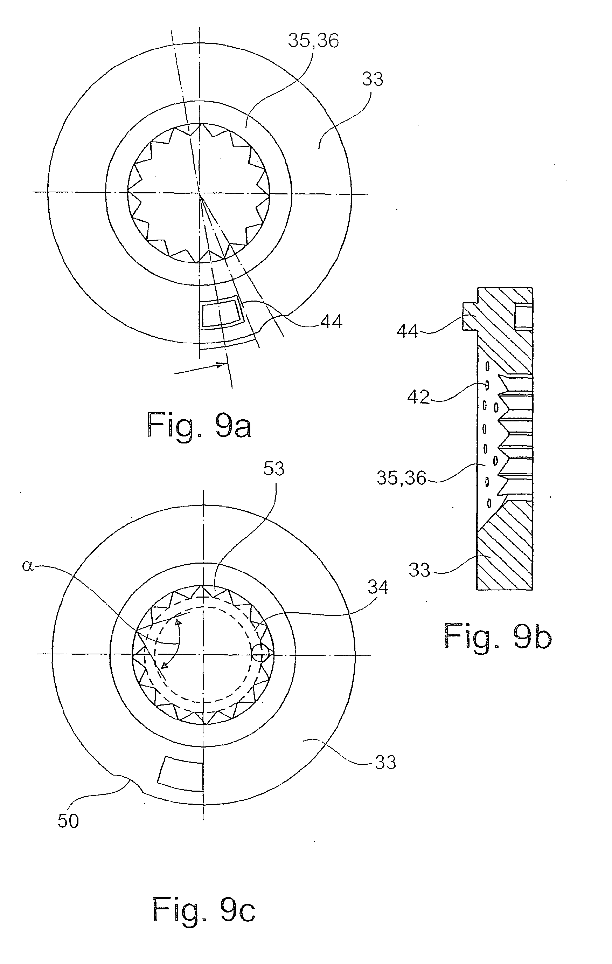

Die Figuren 9a, 9b, 9c zeigen die Stützscheibe 33 in zwei Ansichten und im Längsschnitt. In Figur 9b sind in der Wandung der konischen Öffnung 35 Taschen 42 zur Aufnahme von Schmierstoff vorgesehen. In der Kontaktbahn 37 ist somit ein Schmierfilm aufgebaut, der ein leichtgängiges Verkippen der beiden Lagerflächen 33, 36 unterstützt.

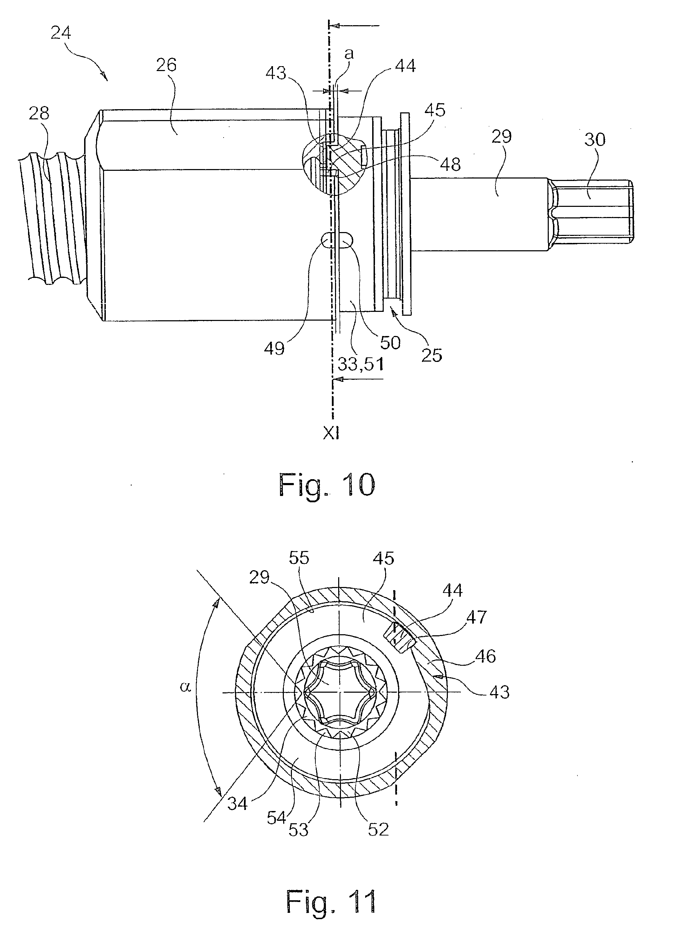

Figur 10 zeigt den erfindungsgemäßen Kugelgewindetrieb mit teilweise gebrochen dargestellter Gewindemutter 26 und Stützscheibe 33. Hier ist ein umfangsseitiger Anschlag 43 für die Gewindemutter 26 zu erkennen, der nachstehend näher beschrieben wird.

Der Figur 10 kann entnommen werden, dass die Stützscheibe 33 an ihrer der Gewindemutter 26 zugewandten Stirnseite mit einem axialen Vorsprung 44 versehen ist. Dieser axiale Vorsprung 44 greift in eine Ausnehmung 45 der Gewindemutter 26 ein.

Figur 11 zeigt deutlich die Ausnehmung 45, die sich in Umfangsrichtung über einen größeren Umfangsabschnitt erstreckt. In der einen Umfangsrichtung ist die Ausnehmung 45 begrenzt durch einen einstückig an der Gewindemutter 26 angeformten Zahn 46, der radial einwärts gerichtet ist. Der Figur 11 ist ferner zu entnehmen, dass der Vorsprung 44 in einer Anschlagposition angeordnet ist, in der er an einer ersten Anschlagfläche 47 des Zahns 46 anschlägt.

In axialer Richtung ist die Ausnehmung 45 begrenzt durch einen einstückig mit der Gewindemutter 26 ausgebildeten Boden 54. In radialer Richtung ist die Ausnehmung begrenzt durch eine einstückig mit der Gewindemutter 26 ausgebildete Umfangswandung 55.

Dieser Anschlag 43 verhindert, dass die Gewindemutter 26 axial mit der Stützscheibe 33 verspannt werden kann. Denn bevor einander zugewandte Stirnflächen der Gewindemutter 26 und der Stützscheibe 33 miteinander in Kontakt kommen, schlägt der Vorsprung 44 gegen die erste Anschlagfläche 47 des Zahns 46 an.

Die Ausnehmung 45 erstreckt sich über einen Umfangswinkel von mehr als 180°, so dass der Vorsprung 44 unter schraubender Relativdrehung zu der Gewindemutter 26 in diese Ausnehmung 45 eintaucht.

Der Umfangsanschlag 43 ist so eingestellt, dass in der Anschlagsituation zwischen der Gewindemutter 26 und der Stützscheibe 33 ein Mindestabstand a eingehalten ist, so dass jedenfalls ein axiales Verspannen zwischen Gewindemutter 26 und Gewindespindel 28 verhindert ist. In der Figur 10 ist der Mindestabstand a eingezeichnet, der zwischen den beiden einander zugewandten Stirnflächen der Gewindemutter 26 und der Spindelscheibe 33 vorgesehen ist..

Insbesondere der Figur 10 kann entnommen werden, dass der Vorsprung 44 und die erste Anschlagfläche 47 in axialer Richtung einander überdecken. Diese axiale Überdeckung ist einerseits kleiner als die gesamte axiale Erstreckung des axialen Vorsprungs 44, so dass auf jeden Fall der weiter oben erwähnte Mindestabstand a gesichert ist. Andererseits ist diese axiale Überdeckung größer als die axiale Erstreckung des Vorsprungs 44 abzüglich des axialen Mindestabstandes a zwischen dem Anschlag 43 und der Gewindemutter 26. Ferner ist die axiale Erstreckung des Vorsprungs 24 höchstens so groß wie die Steigung des Kugelgewindetriebes, um die auftretenden Biegemomente an dem Vorsprung 44 im Augenblick des Anschlagens gegen die erste Anschlagfläche 47 klein zu halten.

Um zu verhindern, dass in der Anschlagsituation radiale Kräfte aufgrund des Anschlagens erzeugt werden, sind eine an dem Vorsprung 44 gebildete zweite Anschlagfläche 48 und die zugehörige erste Anschlagfläche 47 des Zahns 46 in der Anschlagposition in einer gemeinsamen, die Spindelachse enthaltenden Ebene angeordnet.

Die im Ausführungsbeispiel an der Gewindemutter 26 stirnseitig ausgebildete Ausnehmung 45 erstreckt sich in Umfangsrichtung über einen Winkel, der gebildet ist aus einem Quotienten des Verhältnisses aus der oben erwähnten axialen Überdeckung zu der Steigung der Gewindespindel, multipliziert mit 360°, wobei zur Ermittlung des Winkels die axiale Überdeckung und die Steigung der Gewindespindel beide mit der gleichen Längeneinheit bezeichnet sind.

Der Figur 10 kann ferner entnommen werden, dass an der Gewindemutter 26 und an der Stützscheibe 33 jeweils eine optische Markierung 49,50 ausgebildet sind. Diese Markierungen 49,50 sind vorliegend kleine, am Außenumfang eingebrachte Mulden. Diese Markierungen 49 50 ermöglichen eine einfache Montage des Kugelgewindetriebes 24, was nachstehend näher erläutert wird.

Für ein einwandfreies Funktionieren des Anschlags 43 ist die Drehlagenposition der Stützscheibe 33 gegenüber der Gewindespindel 28 von Bedeutung. Wenn beispielsweise im Ausführungsbeispiel die Stützscheibe 33 entgegen dem Uhrzeigersinn um 90° um die Gewindespindel herum verdreht angeordnet wäre, könnte die Situation eintreten, dass die Gewindemutter 26 und die Stützscheibe 33 stirnseitig aneinander anschlagen, bevor der Anschlag 43 in Umfangsrichtung wirksamen ist. Demzufolge ist eine einwandfreie Drehlagenposition eines Anschlagteils 51 gegenüber der Gewindespindel 28 von Bedeutung. Im Ausführungsbeispiel ist das Anschlagteil 51 durch die Stützscheibe 33 gebildet.

Der Figur 11 kann entnommen werden, dass die weiter oben bereits erwähnte Verzahnung 34 zwischen der Stützscheibe 33 und dem Spindelabschnitt 29 der Gewindespindel 28 zur Übertragung von Drehmomenten vorgesehen ist. Diese Verzahnung 34 ermöglicht ein Aufsetzen der Stützscheibe 33 auf den Spindelabschnitt 29 in mehreren Drehlagenpositionen. Diese Verzahnung 34 ist vorliegend gebildet durch eine Außenverzahnung 52 am Außenumfang des Spindelabschnitts 29 und durch eine Innenverzahnung 53 am Innenumfang der Stützscheibe 33.

Ein Zahnflankenwinkel α der Außenverzahnung 52, beziehungsweise der Innenverzahnung 53 ist möglichst klein ausgebildet, so dass möglichst steile Zahnflanken gebildet sind. Steile Zahnflanken erleichtert die weiter oben beschriebene Kippbeweglichkeit der Stützscheibe 33 gegenüber der Gewindespindel 28. Je feiner die Verzahnung ausgebildet ist, desto mehr Drehlagenpositionen sind einstellbar.

Für eine Montage des Kugelgewindetriebes 24 kann zunächst die Gewindemutter 26 auf die Gewindespindel 28 soweit aufgeschraubt werden, bis die Gewindemutter 26 ihre vorgesehene Anschlagposition erreicht hat. Nun kann die Stützscheibe 33 auf den Spindelabschnitt 29 aufgesetzt werden, und gegenüber der Gewindespindel 28 und der Gewindemutter 26 soweit verdreht werden, bis die beiden Markierungen 49,50 miteinander fluchtend angeordnet sind. Nun kann die Stützscheibe 33 axial weiter in Richtung auf die Gewindemutter 26 geschoben werden, wobei die Innenverzahnung 53 in die Außenverzahnung 52 eingreift. Es ist auch denkbar, beispielsweise an der Stützscheibe 33 zwei Markierungen vorzusehen, zwischen denen die Markierung 49 der Gewindemutter 26 anzuordnen ist. Auf diese Weise ist ein Winkel definiert, innerhalb dessen eine zulässige Drehlagenposition für die Stützscheibe 33 gegenüber der Gewindespindel 28 gegeben ist.

Die hier skizzierte Montage kann automatisiert erfolgen, wobei die Markierungen 49,50 über geeignete Messaufnehmer erkannt werden können. Sobald diese Markierungen 49,50 miteinander fluchtend angeordnet sind, kann über eine geeignete Steuerung der nächste Montageschritt ausgelöst und die Stützscheibe 33 mit ihrer Innenverzahnung 53 auf die Außenverzahnung 52 des Spindelabschnitt 29 axial aufgeschoben werden.

Der Kugelgewindetrieb kann ohne Kugelrückführung ausgebildet sein. Das bedeutet, dass die Kugeln in einem endlichen Kugelkanal angeordnet sind und lediglich zwischen dessen Enden hin und her wälzen können. Im Ausführungsbeispiel kann eine Schraubendruckfeder in den Kugelkanal eingesetzt sein, deren eines Ende an dem Zahn 46 abgestützt ist, und deren anderes Ende gegen die letzte Kugel angefedert ist. Bei lastfreiem Kugelgewindetrieb können alle Kugeln unter Einwirkung einer Federkraft der Schraubendruckfeder in Richtung auf das Ende des Kugelkanals gefedert werden. Alternativ kann auch ein Kugelgewindetrieb in bekannter Weise mit Kugelrückführung eingesetzt werden: die Kugeln wälzen in endlosen Kugelkanälen endlos um. Der Kugelkanal ist gebildet aus einem Lastabschnitt, in dem die Kugeln unter Last an Kugelrillen der Gewindemutter und der Gewindespindel anwälzen, sowie einem Rückführungsabschnitt, in dem die Kugeln von einem Ende zu einem Anfang des Lastabschnitts rückgeführt werden. Der Rückführabschnitt kann in bekannter Weise durch ein Umlenkrohr am Außenumfang der Gewindemutter gebildet sein, aber auch durch Umlenkstücke, die in der Wandung der Gewindemutter eingesetzt sind. Diese Umlenkstücke verbinden ein Ende einer gemeinsamen Windung des Lastabschnitts mit dessen Anfang.

Im Ausführungsbeispiel ist die Gewindemutter 26 mit der Ausnehmung 45 und dem Zahn 46 aus einem Einsatzstahl halbwarm geformt. Die Halbwarmumformung wird in einem Temperaturbereich von 750 °C bis 950 °C durchgeführt. Für die Halbwarmumformung können vorgefertigte Rohteile induktiv erwärmt und auf zum Teil mehrstufigen Pressen umgeformt werden.

Die Kugelrille ist vorliegend spangebend durch Drehen hergestellt. Alternativ oder auch zusätzlich kann die Kugelrille mittels Gewindefurchen hergestellt sein. Die fertig geformte Gewindemutter wird anschließend einsatzgehärtet.

Die Stützscheibe 33 ist ebenfalls spanlos, insbesondere im halbwarmen Umformverfahren hergestellt. Insbesondere der Figur 9 kann entnommen werden, dass der axiale Vorsprung etwa halb durchgestellt ist. Das bedeutet, Material der Stützscheibe 33 ist aus dem scheibenförmigen Teil herausgeformt, wobei an der Stützscheibe 33 an ihrer von dem Vorsprung abgewandten Stirnseite mit einer Aussparung versehen ist.

### Bezugszahlenliste

- 1: Bremseinrichtung
- 2: Bremsscheibe
- 3: Bremszange
- 4: Bremsbelag
- 5: Bremsbelag
- 6: Gehäuseartiger Abschnitt
- 7: Kugelgewindetrieb
- 8: Gewindespindel
- 9: Kugeln
- 10: Gewindemutter
- 11: Kugelrückführelement
- 12: Radiallager
- 13: Axiallager
- 14: Kolben
- 15: Konische Führungsfläche
- 16: Führungsfläche
- 17: Wand
- 18: Erste Lagerscheibe
- 19: Zweite Lagerscheibe
- 20: Nadelwälzkörper
- 21: Axialer Ansatz
- 22: zweite Lagerfläche
- 23: erste Lagerfläche
- 24: Kugelgewindetrieb
- 25: Axiallager
- 26: Gewindemutter
- 27: Kugel
- 28: Gewindespindel
- 29: Spindelabschnitt
- 30: Mehrkant
- 31: Schulter
- 32: erste Lagerfläche
- 33: Stützscheibe
- 34: Verzahnung
- 35: konische Öffnung
- 36: zweite Lagerfläche
- 37: Kontaktbahn
- 38: Axialwälzlager
- 39: Rolle
- 40: Lagerscheibe
- 41: Lagerscheibe
- 42: Tasche
- 43: Anschlag
- 44: Vorsprung
- 45: Ausnehmung
- 46: Zahn
- 47: erste Anschlagfläche
- 48: zweite Anschlagfläche
- 49: Markierung
- 50: Markierung
- 51: Anschlagteil
- 52: Außenverzahnung
- 53: Innenverzahnung
- 54: Boden
- 55: Umfangswandung
- A: gemeinsame Achse
- A₁: Achse der Bremszange
- A₂: Achse des Kugelgewindetriebs
- A₃: Achse des Kolbens
- R1: Krümmungsradius der ersten Lagerfläche
- R2: Radius der Kontaktbahn
- S: Spindelachse

## Patentansprüche

1. Kugelgewindetrieb (7, 24), mit einer auf einer Gewindespindel (2, 28) angeordneten Gewindemutter (10, 26), und mit einem zwischen der Gewindespindel (2, 28) und der Gewindemutter (10, 26) angeordneten, umfangsseitigen Anschlag (43), der in einer Anschlagposition der Gewindemutter (10, 26) wirksam ist, wobei ein Anschlagteil (51) an der Gewindespindel (8, 28) angeordnet ist, **dadurch gekennzeichnet, dass** das Anschlagteil (51) und die Gewindemutter (10, 26) jeweils mit einer Markierung (49, 50) zur Ermittlung einer Drehlagenposition des Anschlagteiles (51) versehen sind, in der das Anschlagteil (51) an der Gewindespindel (8, 28) anzuordnen ist.

2. Kugelgewindetrieb (7, 24) nach Anspruch 1, bei dem zwischen dem Anschlagteil (51) und der Gewindespindel (8, 28) eine formschlüssige Verbindung in einer Vielzahl von Drehlagenpositionen des Anschlagteils (51) gegenüber der Gewindespindel (8, 28) vorgesehen sind.

3. Kugelgewindetrieb (7, 24) nach Anspruch 2, bei dem die Gewindespindel (8, 28) mit einem Spindelabschnitt (29) durch eine Öffnung des Anschlagteiles (51) durchgeführt ist, wobei die formschlüssige Verbindung am Außenumfang des Spindelabschnitts (29) und am Innenumfang des Anschlagteiles (51) ausgebildet ist.

4. Kugelgewindetrieb (7, 24) nach Anspruch 2, bei dem das Anschlagteil (51) über eine Vielkantverbindung an der Gewindespindel (8, 28) aufgenommen ist, wobei das Anschlagteil (51) mit einem Innenvielkant und die Gewindespindel (8, 28) mit einem Außenvielkant versehen ist, wobei der Innenvielkant und der Außenvielkant in unterschiedlichen Drehlagenpositionen von Gewindespindel (8, 28) und Anschlagteil (51) miteinander verbunden werden können.

5. Kugelgewindetrieb (7, 24) nach Anspruch 2, bei dem das Anschlagteil (51) über eine Verzahnung (34) an der Gewindespindel (8, 28) aufgenommen ist, wobei das Anschlagteil (51) mit einer Innenverzahnung (53) und die Gewindespindel (8, 28) mit einer Außenverzahnung (52) versehen ist, wobei die Innenverzahnung (53) und die Außenverzahnung (52) in unterschiedlichen Drehlagenpositionen von Gewindespindel (8, 28) und Anschlagteil (51) miteinander verzahnt werden können.

6. Kugelgewindetrieb (7, 24) nach Anspruch 1, bei dem das Anschlagsteil (51) durch eine Stützscheibe (33) gebildet ist, über die die Gewindespindel (8, 28) in axialer Richtung an einem Axiallager (13, 25) axial abgestützt werden kann.

7. Kugelgewindetrieb (7, 24) nach Anspruch 1, bei dem die Markierungen (49, 50) als optische Markierungen ausgebildet sind, beispielsweise durch Einprägungen, Ausnehmungen oder Vorsprüngen.

8. Montageverfahren für einen Kugelgewindetrieb (7, 24) nach Anspruch 1, bei dem die Gewindemutter (10, 26) auf die Gewindespindel (8, 28) aufgebracht wird, und bei dem das Anschlagteil (51) auf der Gewindespindel (8, 28) in eine Drehlagenposition gebracht wird, in der die Markierungen (49, 50) an dem Anschlagteil (51) und an der Gewindemutter(8, 28), in einer vorgegebenen Lage zueinander angeordnet sind, vorzugsweise miteinander fluchten, wobei in der vorgegebenen Lage die Anschlagposition eingestellt ist und das Anschlagteil (51) auf der Gewindespindel (8, 28) zur Übertragung von Drehmomenten festgelegt werden kann.

## Claims

1. Ball screw drive (7, 24) with a threaded nut (10, 26) which is arranged on a threaded spindle (8, 28), and with a circumferential-side stop (43) which is arranged between the threaded spindle (8, 28) and the threaded nut (10, 26) and which is effective in a stop position of the threaded nut (10, 26), wherein a stop part (51) is arranged on the threaded spindle (8, 28), **characterized in that** the stop part (51) and the threaded nut (10, 26) are each provided with a marking (49, 50) for determining a rotational position of the stop part (51) in which the stop part (51) is to be arranged on the threaded spindle (8, 28).

2. Ball screw drive (7, 24) according to Claim 1, in which a positively locking connection is provided in a multiplicity of rotational positions of the stop part (51) with respect to the threaded spindle (8, 28), between the stop part (51) and the threaded spindle (8, 28).

3. Ball screw drive (7, 24) according to Claim 2, in which the threaded spindle (8, 28) is guided with a spindle section (29) through an opening in the stop part (51), wherein the positively locking connection is formed on the outer circumference of the spindle section (29) and on the inner circumference of the stop part (51).

4. Ball screw drive (7, 24) according to Claim 2, in which the stop part (51) is received on the threaded spindle (8, 28) via a polygon connection, wherein the stop part (51) is provided with an inner polygon and the threaded spindle (8, 28) is provided with an outer polygon, wherein the inner polygon and the outer polygon can be connected to one another at different rotational positions of the threaded spindle (8, 28) and stop part (51).

5. Ball screw drive (7, 24) according to Claim 2, in which the stop part (51) is received on the threaded spindle (8, 28) via a toothing system (34), wherein the stop part (51) is provided with an inner toothing system (53) and the threaded spindle (8, 28) is provided with an outer toothing system (52), wherein the inner toothing system (53) and the outer toothing system (52) can be meshed with one another in different rotational positions of the threaded spindle (8, 28) and stop part (51).

6. Ball screw drive (7, 24) according to Claim 1, in which the stop part (51) is formed by a supporting ring (33) via which the threaded spindle (8, 28) can be supported axially in the axial direction on an axle bearing (13, 25).

7. Ball screw drive (7, 24) according to Claim 1, in which the markings (49, 50) are embodied as visual markings, for example by means of indents, recesses or projections.

8. Mounting method for a ball screw drive (7, 24) according to Claim 1, in which the threaded nut (10, 26) is applied to the threaded spindle (8, 28), and in which the stop part (51) is placed on the threaded spindle (8, 28) in a rotational position in which the markings (49, 50) on the stop part (51) and on the threaded nut (8, 28) are arranged in a predefined position relative to one another, preferably flush with one another, wherein in the predefined position the stop position is set and the stop part (51) can be fixed on the threaded spindle (8, 28) in order to transmit torques.

## Revendications

1. Vis à billes (7, 24) comprenant un écrou filetée (10, 26) disposé sur une broche filetée (8, 28) et une butée (43) sur la périphérie, disposée entre la broche filetée (8, 28) et l'écrou fileté (10, 26), laquelle agit dans une position de butée de l'écrou fileté (10, 26), une partie de butée (51) étant disposée au niveau de la broche filetée (8, 28), **caractérisée en ce que** la partie de butée (51) et l'écrou fileté (10, 26) sont à chaque fois pourvus d'un marquage (49, 50) pour déterminer une position de rotation de la partie de butée (51) dans laquelle la partie de butée (51) doit être disposée sur la broche filetée (8, 28).

2. Vis à billes (7, 24) selon la revendication 1, dans laquelle, entre la partie de butée (51) et la broche filetée (8, 28), est prévue une connexion par engagement positif dans une pluralité de positions de rotation de la partie de butée (51) par rapport à la broche filetée (8, 28).

3. Vis à billes (7, 24) selon la revendication 2, dans laquelle la broche filetée (8, 28) est guidée avec une portion de broche (29) à travers une ouverture de la partie de butée (51), la connexion par engagement positif étant réalisée au niveau de la périphérie extérieure de la portion de broche (29) et au niveau de la périphérie intérieure de la partie de butée (51).

4. Vis à billes (7, 24) selon la revendication 2, dans laquelle la partie de butée (51) est reçue par le biais d'une connexion polygonale au niveau de la broche filetée (8, 28), la partie de butée (51) étant pourvue d'un profil polygonal interne et la broche filetée (8, 28) étant pourvue d'un profil polygonal externe, le profil polygonal interne et le profil polygonal externe pouvant être connectés l'un à l'autre dans différentes positions de rotation de la broche filetée (8, 28) et de la partie de butée (51).

5. Vis à billes (7, 24) selon la revendication 2, dans laquelle la partie de butée (51) est reçue par le biais d'une denture (34) au niveau de la broche filetée (8, 28), la partie de butée (51) étant pourvue d'une denture intérieure (53) et la broche filetée (8, 28) étant pourvue d'une denture extérieure (52), la denture intérieure (53) et la denture extérieure (52) pouvant être engagées l'une avec l'autre dans différenties positions de rotation de la broche filetée (8, 28) et de la partie de butée (51).

6. Vis à billes (7, 24) selon la revendication 1, dans laquelle la partie de butée (51) est formée par un disque de support (33), par le biais duquel la broche filetée (8, 28) peut être supportée axialement dans la direction axiale au niveau d'un palier axial (13, 25).

7. Vis à billes (7, 24) selon la revendication 1, dans laquelle les marquages (49, 50) sont réalisés sous forme de marquages optiques, par exemple par des impressions, des évidements ou des saillies.

8. Procédé de montage pour une vis à billes (7, 24) selon la revendication 1, dans lequel l'écrou fileté (10, 26) est monté sur la broche filetée (8, 28), et dans lequel la partie de butée (51) est appliquée sur la broche filetée (8, 28) dans une position de rotation dans laquelle les marquages (49, 50) au niveau de la partie de butée (51) et au niveau de l'écrou fileté (8, 28) sont disposés l'un par rapport à l'autre dans une position prédéfinie, de préférence sont en affleurement l'un avec l'autre, la position de butée étant ajustée dans la position prédéfinie et la partie de butée (51) pouvant être fixée sur la broche filetée (8, 28) en vue du transfert de couples.
